# EUROPEAN PATENT SPECIFICATION

(11) **EP 0 465 135 B1**
(45) Date of publication and mention of the grant of the patent: **06.09.1995**
(21) Application number: 91305839.2
(22) Date of filing: 27.06.1991
(51) Int. Cl.: B60C 23/04

(54) **Electronic-pneumatic protecting device with pressure automatic control**
Elektropneumatische Schutzvorrichtung mit automatischer Druckkontrolle
Dispositif électropneumatique de protection avec contrôle automatique de la pression

(30) Priority: 29.06.1990 AR 317285
(43) Date of publication of application: 08.01.1992
(73) Proprietor: COL-VEN S.A., 3574 Guadalupe Norte, Provincia de Santa Fe (AR)
(72) Inventor: Colussi, Rafael Antonio, (3574) Guadalupe Norte, Santa Fe (AR); Venica, Nestor Juan, (3574) Guadalupe Norte, Santa Fe (AR)
(74) Representative: Hamilton, Alistair

(56) References cited:
- EP-A- 0 193 452
- EP-A- 0 263 251
- WO-A-89/08031
- DE-A- 2 850 787
- FR-A- 2 312 772
- FR-A- 2 577 060

## Description

### BACKGROUND OF THE INVENTION - PRIOR ART

The instant invention relates to a protecting electronic-pneumatic device with pressure automatic control, the main object of which is to control automatically and permanently the internal pressure of one or more tires, thus assuring its precise and uniform calibration in case of eventual pressure losses.

An accesory object of the invention is that said automatic control and calibration is effected in response to the information from one or more sensors located in each circuit, the pressure of which may be different.

Another object of the invention is to eliminate pressure drops in the fluid compressor coupled to the circuit or circuits protected by the device.

A further object of the invention is the inclusion in the electronic circuit of elements indicating the operating status of each step of the device.

Consequently, the device of the invention is mainly used in vehicle wheels, in order to sense and calibrate permanently the pressure of the tires and compensate automatically air losses, displaying the loss in fault indicators and the tire in which the problem takes place.

A number of systems are known, used for obtaining information on pneumatic circuits, widely used in the art. The more common of these systems use pressure gages in the corresponding channels, including electrical contacts, opening or closing as per minimum and maximum limits of the pressure permitted into the circuit, contacts of which may be displaced in order to establish the operating range.

In more sophisticated systems, the command is electronic instead of electric and also operates between predetermined limits adjusted by pressure regulators, said regulators being formed by diaphragms adjusted by means of screw-regulating elastic antagonic means, to define the desired fluid pressure. These systems, mechanically limited, have no sensitivity and preciseness and generally have a high inertia response, therefore they may not be used for fine and precise calibration of pneumatic systems.

As mentioned above, a particular application of the instant invention is for sensing and calibrating the tire pressure of vehicles, such as trucks and trucks with trailers. In these cases, the pressure at each shaft may be different and the system will have to control and protect the whole system.

Among the known systems applied to vehicles, there is an electronic system defined by a radio transmitting the alarm signals when air is exhausted from a tire, the transmitter receiving c.c. electrical power through the metallic structure of the vehicle. The transmitter may emit a fixed frequency and also different frequencies, each frequency being adjusted to each group of tires in order to identify them in this way. The alarm signal receiver is located at the cabin and alerts the driver on which is the tire object of air loss. This system produces the alarm but does not solve the problem as the device of the present invention.

Another system such as is disclosed in EP-A-263251 relies on a magnet rotating on each wheel and operatively coupled to a respective solenoid on a corresponding shock absorber to convey control signals that provide information on the tyre pressure condition on a dashboard display and activate a wheel-mounted valve arrangement to pump up and deflate the tyre in response to magnetic field signals received from the solenoid and originating in manual controls on the dashboard. The air for pumping up is supplied from a compressed-air reservoir also fitted on each wheel.

### SUMMARY OF THE INVENTION

In order to maintain optimum calibration of vehicle tires, the applicant has created the protecting system of the invention. When included in vehicles, tire life has increased more than 20%. This result was obtained due to the immediate air loss detection. Detection of losses, even very small, also permits maintaining normal pressure automatically, not only in the case of small losses but also in the case of large air losses due to breakage of any hose of the pneumatic circuit. These losses are automatically compensated, thus assuring sufficient air pressure for operating brakes, clutch, suspension, etc.

The above disadvantages have been solved by the present electronic-pneumatic protecting device with pressure automatic control, which may be applied, among others, to vehicle tires in order to maintain pressure calibration, detect and signal losses at any tire of the vehicle as well as at the vehicle pneumatic circuits, and compensate said losses until they are overcome, thus avoiding risks resulting from the mentioned problems and damage or total destruction of the involved part, as is the case in vehicle tires.

The system is comprised by an electronic circuit having a regulated source from which, through an interphase block, a low pressure sensor of an air compressing means is fed, to which shunts of said interphase block are added, additional sensors per each pneumatic circuit under control, from the interphase block of which power outlet blocks are connected for each additional sensor, each of which is connected to the respective load block. Said source blocks, compressor low pressure sensor and the cited load blocks are connected to an indication block, as may be seen in more detail hereinbelow.

According to the invention, there is provided an electronic-pneumatic protecting device for automatic control of air-pressure in tyres, including means for continuously sensing said tyre air pressure, means for determining whether said tyre air-pressure has dropped below a predetermined tyre value and means for compensating any such air-pressure drop by pumping air derived from a compressed-air supply to said tyre, characterised by comprising: a compressor; a pneumatic subcircuit associated with each wheel to be controlled and comprising an air-pressure gauge coupled to the tyre on said wheel through a rotary joint mounted to the axle thereof and electrovalve means coupling the corresponding wheel tyre through said rotary joint to said compressor; and an electronic subcircuit associated with each said pneumatic subcircuit and comprising a sensing block interfacing the corresponding gauge for determining whether said tyre air-pressure has dropped below the predetermined tyre value and a power driving block interfaced with the corresponding electrovalve means to power said electrovalve means open to compensate for any substantial air-pressure drop.

The invention will now be described in connection with a preferred embodiment thereof, illustrated by the attached drawings, which by no means are intended to limit the scope of the invention.

### BRIEF DESCRIPTION OF THE DRAWINGS

Figure 1 is a block diagram of the electronic circuit forming part of the invention.

Figure 2 shows the complete electronic circuit of the protecting device.

Figure 3 is a schematic view of the electronic-pneumatic assembly constituting the protecting device with pressure automatic control applied to a vehicle.

In all figures, the same reference numerals indicate corresponding or equal parts.

### DETAILED DESCRIPTION OF THE INVENTION

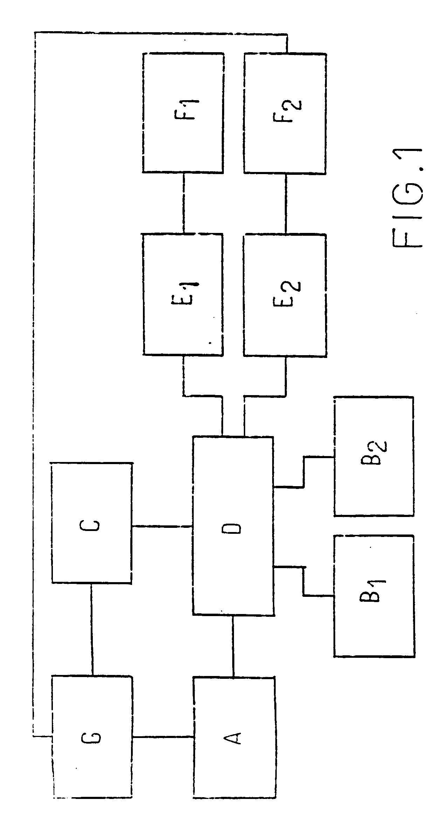

In the particular embodiment shown in the drawings, the electronic device is comprised, as may be seen in the block diagram of figure 1, by a power source A, two or more sensors B1, B2; a sensor C sensing low pressure at the pneumatic compressor; an interphase block D, connecting power outlets E1 and E2 to the corresponding load blocks F1 and F2 (control electrovalves, not shown) and block G representing operating indicators of the device.

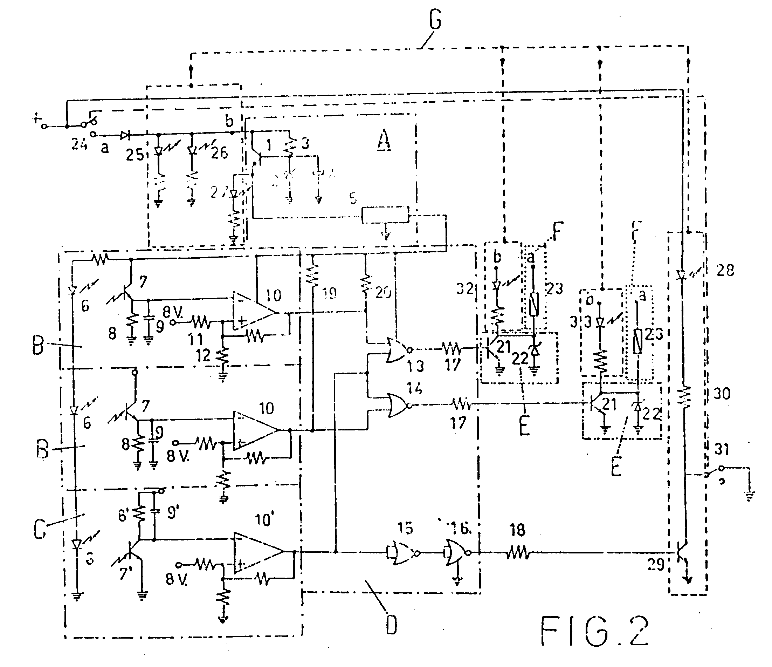

Figure 2 shows blocks illustrated in figure 1, as follows:
The power source block A is formed by a transistor 1 and a Zener diode 2 with its corresponding biasing resistor 3 and filter capacitor 4. This regulating step is improved by an integrated source 5.

Pressure sensor blocks, the amount of which will depend on the amount of shafts to be controlled, are formed by infrared sensors comprised by an infrared emitting diode 6 with its corresponding phototransistor 7,biasing resistor 8 and filter capacitor 9 and operating amplifier 10 biased by means of resistors 11 and 12, arrangement of block B1. The same applies to block B2 in which the forming elements receive the same designation.

Block C, referred to a sensor equal to the former ones, low pressure detector in the compressor means, is formed by the same components as above, except that, due to its inverted operation, biasing of phototransistor 7′ will be different, such as that indicated by resistor 8′ and capacitor 9′ connected positively in this case , and correspondlng operating amplifier 10′ also fed by 8V (8 volts).

Operating amplifiers 10 and 10′ form part of a linear integrated circuit.

The following interphase step, represented by block B is formed by NO-NOR two inlet gates 13, 14, 15 and 16 and biasing resistors 17 and 18. By means of resistors 19 and 20 added to gates 14 and 13, respectively, a high level to the inlets is maintained. The gates form part of a quadruple integrated two inlet circuit, as mentioned above.

Power outlets connected to the interphase block, in this case two (number of shafts under control), E1 and E2, are formed by transistors NPN 21 and a Zener diode 22, connected, respectively, to electrovalves 23 of compressed air passage control, constituted corresponding loads F1 and F2.

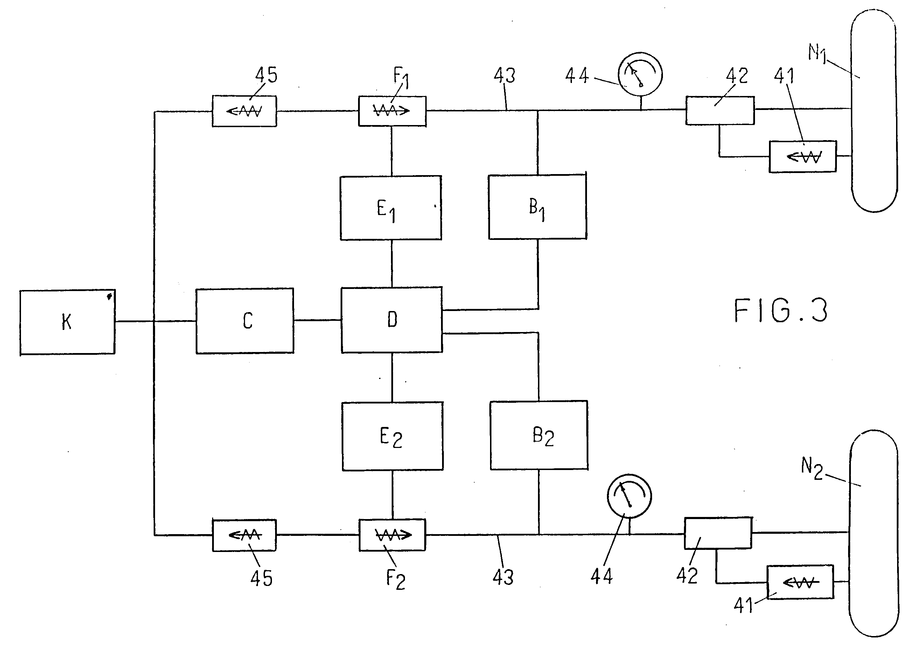

At the inlet of the power source, a double-inverter switch 24 is located, followed, at one of its shunts, by a diode followed by the indication block, at the first part of which there are first and second light emitting diodes (leds) 25 and 26 lighting pressure gages (shown in figure 3) and a third light emitting diode 27, also of green color, with biasing resistors, towards the inlet of regulated source block A. Green diode 7 indicates energized system and normal pressure into the tires. From the power source, before the switch 24, a fourth red light emitting diode 28 is located, with its corresponding limiting resistor, engaged to block C through interphase D through the base of transistor 29 NPN to the collector of which it is connected. The emitter is connected to ground. Between the limiting resistor 30 and the transistor 29 collector, a second inverter switch 31 is shunted, one of the pins of which is connected to ground being is medium point connected to one of the pins of the inverter switch 24. The indication block is completed with yellow light emitting diodes per sensor, in this case two, a fifth diode 32 and a sixth diode 33 with their biasing resistors connected to corresponding collectors of the mentioned transistors 21, indicating that the system is recovering air into the damaged tire.

The red light emitting diode 28 indicates that the system is de-energized and in turn also indicates when the low pressure sensor actuates in the compressor (block C).

In figure 3 two shafts are shown between tires N1 and N2. The conventional tire nozzle has been replaced by a valve 41 preventing all tires from becoming empty in case of damage of one of them. These valves pass through the rotary joint 42 and then by piping 43. At each shaft there is a pressure gage 44 indicating the pressure existing at the circuit, which includes electrovalve 23 followed by a check valve 45 for maintaining the fluid pressure within the piping 43, in case compressor K is disconnected.

Sensors B1 and B2 record permanently the pressure of each of the shafts, i.e. of their tires, connected in this case by piping 43, said information being directed to interphase D. Simultaneously, the pressure sensor of compressor K represented by block C sends the information to said interphase block D.

It is evident from the drawing that compressor K supplies the compressed air required by the pneumatic circuits existing in the vehicle. In this case, tire circuits mounted at each shaft, the number of which may range between two and for or more, will have the same pressure, which would be 95 pounds/square inch (6.68 kg/cm²). If any loss exist at tire N1 and this pressure drops, for example to 90 pounds/in² (6.33 kg/cm²), this pressure will also be found in piping 43 displayed by the respective pressure gage 44. This pressure decrease will be detected by sensor B1 connected to this piping, the corresponding signal will be received by block D interphase the electronic circuit of which operates through block E1 driving the coresponding load F1, i.e. the electrical operating valve 23. Normal pressure generated by compressor K overcoming check valve 45 enters piping 43 for introducing into the damages tire through the rotary joint 42 and valve 41, until pressure increases to its normal value, moment in which the electrovalve 23 is closed.

The low pressure sensor C of compressor K permanently controls its pressure, in turn preventing opening of electrovalves 23 and starting the red light emitting diode 28 to give a signal to the vehicle driver when such pressure is lower than the pressure recorded by said sensor C. Therefore, a minimum safety value is assured allowing operation of the brake pneumatic system and the corresponding air suspension, starting at the same time the compensation system for recovering the normal value.

### OPERATION

A functional and operative outline of the forming elements and of the result obtained will be detailed below.

The electronic-pneumatic protecting device with pressure automatic control, applied to automotive vehicles, has at the control panel the double inverter switch 24 which, when not activated, lights red led 28 through the limiting resistor 30. When the circuit is activated, inverted position of switch (a), said red led goes off and feeds the circuit lighting green indicator led 27 and lighters of pressure gages 25 and 26. Zener diode 2 and resistor 3 bias the regulating transistor 1, thus obtaining the required voltage at the emitter and inlet of integrated source 5. At the outlet the required stabilized tension for feeding the assembly, in this case 8 volts, will be obtained.

Infrared sensors 6 of block B will activate or de-activate electrovalves 23, in accordance with the position of the valve closing means, which will be placed as per the pressure of the air received. When light goes off between the corresponding emitter 6 and phototransistor 7, a low level is obtained at the inverter inlet of the operating amplifier 10, the non inverter inlet is biased by means of resistors 11 and 12 to a fixed value, therefore a high level is obtained at the operational outlet. The first gate NOR 13 will deliver at its outlet a 0 level and therefore, transistor NPN 21 will not be activated. The corresponding electrovalve 23 does not open and therefore it does not deliver air. Yellow led 32 does not lit. When pressure decreases, the closing means will allow passage of light and activate the system in a way contrary to that previously mentioned. Therefore, electrovalve opens and air passes until to the closing means (not shown), in response to the pressure exerted by its corresponding spring, again closes preventing passage of infrared light.

Infrared sensor 6 corresponding to block C acts in a similar way, except transistor 7′ which, being biased in a way different from the existing ones in blocks B, will deliver a higher level when stopping light rays. Therefore, when the pressure in compressor K is too low, in order to avoid that the brake system, the suspension and other systems remain without pressure, electrovalves 23 are not activated since the operating integrated amplifier 10′ supplies a high level to one of the inlets of gates 13 and 14 commanding power transistors 21 of block E. This pressure will be indicated by means of red led 28 through saturation of transistor 29.

Resistors 19 and 20 assure the maintenance of a high level at the inlet of gates 13 and 14, thus avoiding the problem created by activation through switch 24, where said gates 13 and 14 momentaneously deliver a high level to the assembly thus causing opening of electrovalves 23 and cause .a small inflation of the tire any time the operation is repeated, even though the sensor is deactivated (yellow light 32 and 33).

## Claims

1. Electronic-pneumatic protecting device for automatic control of air-pressure in tyres (N₁,N₂), including means (B1,B2) for continuously sensing said tyre air pressure, means (6,7,8,9,10,11) for determining whether said tyre air-pressure has dropped below a predetermined tyre value and means (23,K,41,42,43,44,45) for compensating any such air-pressure drop by pumping air derived from a compressed-air supply to said tyre (N₁,N₂), characterised by comprising: a compressor (K); a pneumatic subcircuit associated with each wheel to be controlled and comprising an air-pressure gauge (44) coupled to the tyre (N1,N2) on said wheel through a rotary joint (42) mounted to the axle thereof and electrovalve means (F1, F₂) coupling the corresponding wheel tyre (N₁,N₂) through said rotary joint (42) to said compressor (K); and an electronic subcircuit associated with each said pneumatic subcircuit and comprising a sensing block (B) interfacing the corresponding gauge (44) for determining whether said tyre air-pressure has dropped below the predetermined tyre value and a power driving block (E) interfaced with the corresponding electrovalve means (F₁,F₂) to power said electrovalve means (F₁, F₂) open to compensate for any substantial air-pressure drop.

2. A device as claimed in claim 1, in which the compressor (K) is coupled to a low-pressure sensor (C) and each of said electronic subcircuits associated with each wheel to be controlled further comprises an interphase block (D) for combining the output of the corresponding tyre pressure gauge (44) with the output from said low-pressure sensor (B₁,B₂) and precluding opening of the electrovalve means (F₁,F₂) in the event that the compressor air-pressure is less than a predetermined compressor value.

3. A device as claimed in claim 1 or 2, in which each pneumatic subcircuit further includes a first check valve (41) coupled between each tyre (N₁,N₂) and the corresponding rotary joint (42) to avoid any one damaged tyre (N₁,N₂) from deflating the tyres of the rest of said wheels to be controlled or depressurising the compressor (K).

4. A device as claimed in claim 3, in which said first check valve (41) is coupled between a respective tyre (N₁,N₂) and the corresponding rotary joint (42).

5. A device as claimed in any preceding claim, in which each pneumatic circuit further includes a second check valve (45) in series with the corresponding electrovalve means (F₁,F₂) to prevent the associated tyre (N₁,N₂) from deflating in the event said compressor (K) is disconnected therefrom.

6. A device as claimed in any preceding claim, in which said sensing block (B) comprises light emitting means (6) and associated phototransistor means (7) positioned relative to one another whereby light from said emitting means (6) may impinge on said phototransistor means (7), depending on whether the corresponding tyre air-pressure is above or below said predetermined value; and in that said sensing block (B) comprises operational amplifier means (10) having an input connected to said phototransistor means (7) and an output for generating a signal in response to said tyre air-pressure being less than said predetermined pressure, and transistor means (21) connected to said output from the operational amplifier means (10) and loaded by said associated electrovalve means (F₁,F₂) for driving and opening said electrovalve means (F₁,F₂) in response to said signal.

7. A device as claimed in any one of claims 2 and 6, in which said interphase block (D) comprises logic gate means (13) connected in each of said electronic subcircuits, said interphase block (D) responsive to said low-pressure sensor for blocking said signal from passing from the operational amplifier (10) output to the associated transistor (21) to maintain said electrovalves (F₁,F₂) closed when the sensed compressor pressure is less than the nominal compressor value.

8. A device as claimed in any preceding claim, further including manual switch means (24) for turning off power to said electronic subcircuits, thereby rendering the device inoperative and keeping all said electrovalve means (F₁,F₂) closed.

9. A device as claimed in any preceding claim, further comprising indicator means (G) including: a plurality of first light-emitting diodes (32,33) each connected to a respective one of said electronic subcircuits for signalling that the corresponding tyre (N₁,N₂) is underpressurised and the electrovalve means (F₁,F₂) open.

10. A device as claimed in claims 6 to 9, in which said first light-emitting (32,33) diodes are connected to said transistors (21); and in that said indicator means (G) further includes a second light-emitting diode (25 or 26) connected to said manual switch (24) for indicating that said device is powered on and a third light-emitting diode (28) connected to said low-pressure sensor for indicating that said device is inoperative.

11. A device as claimed in claim 10, in which said first light-emitting diodes (32,33) are yellow, said second light-emitting diode (25 or 26) is green and said third light-emitting diode (28) is red.

## Patentansprüche

1. Elektronisch pneumatische Schutzvorrichtung zur Luftdruckkontrolle des Luftdruckes im Reifen (N₁, N₂) welche die Mittel (B₁, B₂) beinhaltet um kontinuierlich diesen Luftdruck zu messen, Mittel (6,7,8,9,10,11) um festzustellen ob dieser Luftdruck unter einen vorbestimmten Wert abgesunken ist und Mittel (23,K,41,42,43,44,45) um diesen Luftdruckabfall im Reifen (N₁, N₂) zu kompensieren durch Luft von einer Pressluftquelle, charakterisiert durch einen Kompressor (K), ein Luftdruckkreis für jedes zu kontrollierende Rad und bestehend aus einem Druckschalter (44) der an den Reifen (N₁, N₂) des zu kontrollierenden Rades angeschlossen ist mittels einer rotierenden Dichtung (42), die zum Kompressor (K) gehört, ein jedem Luftdruckkreis zugeordneter elektronischen Überwachungskreis welcher aus einem Messblock (B) besteht, mit Schnittstelle zum Druckschalter (44), zur Überwachung eines vorgegebenen Mindestdruckes im Reifen und Leistungsblock (E) mit Schnittstelle zu einem elektrisch betriebenen Ventil (F₁, F₂) um gegebenenfalls jeden wesentlichen Druckabfall auszugleichen durch Luftzufuhr aus der Pressluftquelle.

2. Eine Vorrichtung wie im vorangehenden Anspruch 1., charakterisiert durch die Tatsache, daß der genannte Kompressor (K) an einen Messwertgeber für zu niederen Luftdruck (C) angeschlosssen ist und alle den einzelnen Rädern zugeordnete elektronische Kontrollkreise einen Schnittstellenblock (D) beinhalten um den Druckschalter (44) des entsprechenden Reifens abzuschalten, Abschalten der Messwertgeber (B₁, B₂) um das Öffnen der Elektroventile (F₁, F₂) zu verhindern im Falle, daß der Luftdruck der Luftdruckquelle geringer ist als ein für diese Luftdruckquelle vorgegebener Mindestwert.

3. Eine Vorrichtung wie gefordert in den Ansprüchen 1. oder 2., charakterisiert durch die Tatsache, daß besagte erste Rückhalteventil (41) zwischen jeden Reifen (N₁, N₂) und die entsprechende rotierende Dichtung (42) angeschlossen ist um zu verhindern, daß ein beschädigter Reifen (N₁, N₂) den anderen Reifen der genannten Räder die Luft ablassen könnte.

4. Eine Vorrichtung gemäß Anspruch 3., charakterisiert durch die Tatsache, daß besagtes erstes Rückhalteventil (41) zwischen einem Reifen (N₁, N₂) und der entsprechenden rotierenden Dichtung (42) angeschlossen ist.

5. Eine Vorrichtung wie in irgend einem der vorangehenden Ansprüche, charakterisiert durch die Tatsache, daß in jedem pneumatischen Kreis außerdem ein zweites Rückhalteventil (45) in Reihe mit der Vorrichtung des entsprechenden Elektroventils (F₁, F₂) vorgesehen ist um zu verhindern, daß der entsprechende Reifen (N₁, N₂) Luft verlieren könnte im Falle, daß sich die Verbindung zum Kompressor (K) löst.

6. Eine Vorrichtung gemäß irgend eines der vorangehenden Ansprüche, charakterisiert durch die Tatsache, daß der vorgenannte Messwertgeberblock (B) lichtemittierende Mittel (6) und assozierte Phototransistoren beinhaltet, derart angeordnet, daß das von den lichtemittierenden Mittel (6) ausgehende Licht von den Phototransistoren (7) als Signal registriert wird mit der Information ob der Luftdruck in dem Reifen größer oder Meiner als der vorgegebene Wert ist; und durch die Tatsache: daß der vorgenannte Messwertgeberblock (B) einen Operationsverstärker (10) beinhaltet welcher einen Eingang an die Phototransistoren (7) und einen Ausgang um ein Signal zu generieren das angibt ob der Luftdruck geringer ist als der vorgegebene Wert ist, hat, transistorisierte Mittel (21) welche an den genannten Ausgang des Operationsverstärkers (10) angeschlossen sind zur Betätigung der Elektroventile (F₁, F₂) um diese Elektroventile (F₁, F₂) zu öffnen als Antwort auf das genannte Signal.

7. Eine Vorrichtung gemäß dem beanpruchten in den Ansprüchen 2. und 6., charakterisiert durch die Tatsache, daß besagter Schnittstellenblock (D) logische Mittel als Ports (13) beinhaltet welche angeschlossen werden an jedes der genannten Unterschaltkreise, wobei dieser Schnittstellenblock (D) das Signal von zu geringem Druck des Kompressors in der Alt berücksichtigt, daß er verhindert, daß dieses Signal am Ausgang des Oprationsverstärkers (10) zum Transistor (21) auftritt assoziert mit der Aufgabe genannte elektrisch betriebenen Ventile (F₁, F₂) geschlossen zu halten wenn der am Kompressor gemessene Druck geringer als der nominale Wert ist.

8. Eine Vorrichtung wie beansprucht in irgend einem vorhergehenden Anspruch, charakterisiert dadurch, daß es außerdem ein manuelles Schaltmittel (24) beinhaltet zum abschalten der genannten Subschaltkreise um so die Vorrichtung zu desaktivieren und besagte Elektroventile (F₁, F₂) geschlossen zu halten.

9. Eine Vorrichtung in Übereinstimmung mit dem beanspruchten in irgend einem vorherigen Anspruch, dadurch charakterisiert, daß es Anzeige Medien (G) besitzt welche mehrere Licht emittierende Dioden beinhalten (32, 33) jede davon an ein Subschaltkreis angeschlossen um anzuzeigen, daß der entprechende Reifen (N₁, N₂) zu geringen Druck hat und daß die Mittel der Elektroventile (F₁, F₂) offen sind.

10. Eine Vorrichtung in Übereinstimmung mit den Ansprüchen 6 bis 9, welche charakterisiert ist durch die Tatsache, daß die vorgenannten Licht emittierenden Dioden (32, 33) an genannte Transistoren (21) angeschlossen sind und die Tatsache, daß die genannten Anzeige Medien (G) eine zweite Licht emittierende Diode beinhalten (25 oder 26) welche angeschlossen ist an vorgenannten manuellen Schalter (24) um anzuzeigen daß diese Vorrichtung eingeschalten ist und eine dritte Licht emittierende Diode (28) welche angeschlossen istan den genannten Messwertgeber für zu niederen Druck um anzuzeigen, daß diese Vorrichtung außer Betrieb ist.

11. Eine Vorrichtung wie beansprucht in dem Anspruch 10, charakterisiert durch die Tatsache, daß die zuerst genannten Licht emittierenden Dioden (32,33) gelb sind, die an zweiter Stelle genannte Licht emittierende Diode (25 oder 26) grün ist und die an dritter Stelle genannte Licht emittierende Diode (28) rot ist.

## Revendications

1. Dispositif protecteur pneumatique-électronique pour controle automatique de pression d'air en pneus (N₁, N₂), incluant des moyens (B₁, B₂) pour senser continuellement la dite pression d'air, et des moyens (6,7,8,9,10,11) pour déterminer si la dite pression d'air du pneu est descendue à moins d'une valeur prédéterminée et des moyens (23,K,41,42,43,44,45) pour compenser la dite chute de pression en pompant air au dit pneu (N₁, N₂) provenant d'une source d'air comprimé, caractérisé par comprendre : un compresseur (K), un souscircuit pneumatique associé avec chaque roue à contrôler et qui comprend un pressostat (44) accouplé au pneu (N₁, N₂) de la dite roue par l'intermédiaire d'un joint rotatoire (42) monté sur l'axe du même et des moyens d'électrovalve (F₁ , F₂), accouplant le pneu (N₁ , N₂), de la roue correspondante au travers du joint rotatoire (42) correspondant au dit compresseur (K), un souscircuit électronique associé avec chacun des dits souscircuits pneumatiques et qui comprend un bloc de sensage (B) interfacé avec le pressostat (44) correspondant pour déterminer si la pression d'air du pneu est descendue en dessous de la valeur prédéterminée et un bloc de puissance (E) interlace avec le moyen d'électrovalve (F₁ , F₂) correspondant pour ouvrir ce (F₁ , F₂) et compenser toute chute substantielle de pression d'air.

2. Un dispositif selon revendiqué dans la revendication 1, caractérisé par le fait que ce compresseur (K) est accouplé à un senseur de basse pression (C) et parce que chacun de ces souscircuits électroniques associés avec chaque roue à contrôler comprend aussi un bloc interface (D) pour combiner la sortie du pressostat (44) du pneu correspondant avec la sortie dudit senseur de basse pression (B₁ , B₂) et bloquer l'ouverture des moyens d'électrovalves (F₁ , F₂) dans l'eventualité que la pression d'air du compresseur soit inférieure à un valeur du compresseur prédéterminée.

3. Un dispositif selon revendique dans la revendication 1 ou 2, caractérisé par le fait que chaque souscircuit pneumatique inclut aussi une première valve de rétention (41) accouplée entre chaque pneu (N₁ , N₂) et le joint rotatoire (42) correspondant pour éviter que quelque pneu (N₁ , N₂) avarié dégonfle les pneus du reste dites roues à contrôler ou dépressurise le compresseur (K).

4. Un dispositif selon revendiqué dans la revendication 3, caractérisé par le fait que la dite première valve de rétention (41) est accouplée entre un pneu (N₁ , N₂) repectif et le joint rotatoire (42) correspondant.

5. Un dispositif selon revendiqué dans quelconque des revendications précédentes, caractérisé par le fait que chacun circuit pneumatique inclut aussi une deuxième valve de rétention (45) en série avec le moyen d'électrovalve F₁ , F₂) correspondant, pour prévenir le dégonfletement du pneu (N₁ , N₂) associé dans l'eventualité que le dit compresseur (K) se déconnecte du nême.

6. Un dispositif selon revendiqué dans qualconque des revendications précédents, caractérisé par la fait que le dit bloc senseur (B) comprend des moyens émetteurs de lumière (6) et des moyens phototransistors (7) associés localisés réciproquement de manière que la lumière en provenance des dits moyens émetteurs (6) peut incider sur les dits moyens phototransistors (7) selon que la pression d'air du pneu soit supérieure ou inférieure à la dite valeur prédéterminée; et per le fait que le dit bloc senseur (B) comprend des moyens amplificateurs opérationnels (10) pourvus d'une entrée connectée aux dits moyens phototransistors (7) et une sortie pour générer un signal en réponse à la pression d'air dans le dit pneu inférieure à la dite pression prédéterminée, et des moyens transistors (21) connectés à la dite sortie des moyens amplifcateurs opérationnels (10) et chargés par les dits moyens d'électrovalves (F₁ , F₂) associés pour commander l'ouverture des dits moyens d'électrovalves (F₁ , F₂) en résponse au dit signal.

7. Un dispositif selon revendiqué dans les revendications et 6, caractérisé par le fait que le dit bloc interface (D) comprend des moyens logiques de vanne (13) connectés à chacun des dits souscircuits électroniques, le dit bloc interface (D) répondant au dit senseur de pression basse pour empêcher que le dit signal passe de la sortie du amplificateur opérationnel (10) au transistor (21) associé pour maintenir fermées les dites électrovalves (F₁ , F₂) quand la pression sensée du compresseur est inférieure à la valeur nominale du compresseur.

8. Un dispositif selon revendiqué dans quelconque des revendications précédentes, caractérisé par incluire aussi un moyen commutateur manuel (24) pour éteindre l'alimentation des dits souscircuits électroniques, pour ainsi désactiver le dispositif et maintenir fermées les dites électrovalves (F₁ , F₂).

9. Un dispositif selon revendiqué dans quelconque des revendications précédentes, caractérisé par comprendre aussi moyens indicateurs (G) incluant une pluralité de premiers diodes émetteurs de lumière (32 , 33) connectés chacun à un respectif des dits souscircuits électroniques pour signaler que le pneu (N₁ , N₂) correspondant est infrapressurisé et que les moyens d'électrovalves (F₁ , F₂) sont ouverts.

10. Un dispositif selon revendiqué dans les revendications 6 a 9, caractérisé par le fait que les dits premiers diodes émetteurs de lumière (32 , 33) sont connectés aux dits transistors (21); et par le fait que les dits moyens indicateurs (G) incluent aussi un deuxième diode émetteur de lumière (25 ou 26) connecté au dit commutater manuel (24) pour indiquer que le dit dispositif est allumé et un troisième diode émetteur de lumière (28) connecté au dit senseur de basse pression pour indiquer que le dit dispositif est hors de service.

11. Un dispositif selon revendiqué dans la revendication 10, caractérisé par le fait que les dits premiers diodes émetteurs de lumière (32 , 33) sont jaunes, le dit deuxième diode émetteur de lumière (25 ou 26) est vert et le dit troisième diode émetteur de lumière (28) est rouge.
